# EUROPEAN PATENT APPLICATION

(11) **EP 4 563 378 A1**
(43) Date of publication of application: **04.06.2025**
(21) Application number: 23213693.7
(22) Date of filing: 01.12.2023
(51) Int. Cl.: B60K 1/04

(54) **UNDERBODY PROTECTION ELEMENT FOR A BATTERY OF AN ELECTRIC VEHICLE**

(71) Applicant: Autoneum Management AG, 8406 Winterthur (CH)
(72) Inventor: PEZZANI, Flavio Gino, 6946 Ponte Capriasca (CH)

(57) **Abstract**

An underbody protection element intended to be installed on the underbody of an associated electric vehicle for protecting an electric battery from impacts and comprising an impact protection panel with a plurality of panel portions, each having at least one side formed by a curved surface having a concavity that faces the electric battery of the associated vehicle when the underbody protection element is installed on said vehicle.

## Description

### Technical Field

The invention relates to an underbody protection element for a traction battery of an electric vehicle.

### Background Art

An electric vehicle is generally powered by a rechargeable battery, which provides the electric power needed to drive the electric motor or the electric motors used to propel the vehicle itself. An electric battery generally consists of a number of electrically connected battery cells, usually grouped into modules arranged in a regular grid pattern.

Among the different types of rechargeable batteries, lithium-ion batteries, in particular, are widely used in electric vehicles because of their high energy density which, for a given battery weight, may guarantee a longer driving range.

In an electric vehicle, the battery is normally installed in the region underneath the vehicle body. Typically, it is enclosed within a battery case made with metal and comprising an upper shell, hereafter referred to as battery cover or battery lid, which encases the battery from above, and a lower shell, hereafter referred to as battery tray, on which the battery sits. In between the battery lid and the battery tray, the battery case typically comprises also structural partitions which, in addition to stiffening its structure, sub-divide its internal space into sub-compartments, in each one of which a battery module may be conveniently accommodated.

Rechargeable batteries for traction of electric vehicles, particularly lithium-ion batteries, can raise important safety concerns. In particular, in the event of mechanical damage due to, for example, impacts and/or punctures, short circuits may occur within one or more battery cells, which may lead to exothermic decomposition of their chemical components. This leads to a strong increase in their temperature, which may propagate to nearby battery cells, in turn over-heating them and generating a cascade effect known as "thermal runaway". During thermal runaway, very high temperatures may be generated in a very short time inside the battery and the chemical constituents of the battery cells may catch fire, ultimately leading, in extreme cases, also to explosions.

To reduce the risk of mechanical damage to battery cells, car manufacturers typically protect the battery of a battery electric vehicle with an impact protection plate, installed underneath the battery tray. Traditionally, impact protection plates have been made of metal; however, a shift towards lighter composite materials has recently been observed, mainly due to the advantageous impact protection/weight ratio these materials may offer.

For example, EP4077106 discloses a structural underbody protection element for an electric vehicle consisting of a sandwich comprising a core layer element cohesively connected to two cover/skin layers, wherein the core layer is made of a first thermoplastic material and the two cover layers are made of a second fiber-reinforced, thermoplastic material and wherein the core layer consists of an injection moulding or an extrusion moulding compound introduced between the two cover layers.

A similar sandwich construction for an impact protection plate is proposed in EP4183580, wherein the core layer is a viscoelastic elastomer having a shore D hardness of below 62. According to the disclosure of EP4183580, the core layer acts as a shock-absorbing layer, distributing the energy of an impact over a large surface and thus minimising the risk of permanent cracks in the skin layers and even allowing the protection plate to bounce back to its original shape after the impact.

Solutions like those disclosed in the above-mentioned documents may represent a valuable progress over traditional impact protection plates made with metal, since they may provide a comparable impact resistance for a much lower weight.

It is the object of the present invention to provide a further underbody protection element based on composite materials, which represents an alternative to the above-mentioned state of the art solutions and which may provide advantages in terms of impact resistance/weight ratio, ease of assembly on a vehicle, design flexibility and production process simplification.

### Summary of invention

The object of the invention is achieved by an underbody protection element according to claim 1 and a related manufacturing process according to claim 15.

In particular, the object of the invention is achieved by an underbody protection element intended to be installed on the underbody of an associated electric vehicle for protecting an electric battery from impacts and comprising an impact protection panel comprising at least one composite material and having a battery side intended to face the battery of the associated electric vehicle when the underbody protection element is installed on said vehicle and a road side intended to face away from the battery of the associated electric vehicle when the underbody protection element is installed on said vehicle, wherein the impact protection panel comprises a plurality of panel portions each having at least one side formed by a curved surface having a concavity that faces the electric battery of the associated vehicle when the underbody protection element is installed on said vehicle.

Here above and in all what follows, an "electric vehicle" is any vehicle powered, even only partially, by an electric battery including, but not limited to, fully electric vehicles, hybrid vehicles, plug-in hybrid vehicles and vehicles equipped both with an electric battery and with a range extender.

A "layer" is a body consisting of one or more materials and filling the space between two closely spaced surfaces, wherein the distance between the surfaces is substantially smaller than their size. The two surfaces are indicated as the "sides" of the layer and they are opposite to each other. The distance between the two surfaces is referred to as the thickness of the layer, which may be variable. A layer may comprise other layers.

A structural element shaped as a layer is here called a panel, which may comprise one or more materials. The sides of the layer are considered to be also the sides of the panel. A portion of a panel is simply a part or a region of a panel.

A "composite material" is a material which is produced from two or more constituents, which may have dissimilar chemical or physical properties and are merged for creating a material with macroscopic properties (e.g., mechanical properties) unlike those of the individual constituents. Within a composite material, the individual consituents remain separate and distinct, which makes a composite material different from mixtures and solid solutions. A constituent of a composite material may itself be a composite material.

A remarkable example of a composite material is that of Carbon Fiber Reinforced Plastics (CFRP), wherein the main constituents are represented by a polymeric plastic matrix (for example, polypropylene) and reinforcing carbon fibers. A similar example is that of Glass Fiber Reinforced Plastics (GFPR), wherein glass fibers are used instead of carbon fibers.

Another remarkable example of a composite material is that of a sandwich consisting of a core layer and two skin layers, wherein one of the skin layers is cohesively bonded to one side of the core layer and the other skin layer is cohesively bonded to the other side of the core layer. In this case, the constituents of the composite material are given by the material of core layer and by the material or materials of the skin layers. In turn, each one of these same layers may consist of a composite material, e.g. a CFRP or a GFRP material.

Here above and in what follows, a curved surface is a surface which does not comprise any flat portion.

Depending on their geometry, curved surfaces may have a concavity. A curved surface has a concavity when, given any two arbitrarily chosen points on the surface, the line connecting those two points never intersects the surface. In this case, the volume filled by all the straight lines connecting every possible pair of points on the surface is the "concavity" associated with the concave surface. Based on this definition, the concavity of a curved surface is a volume, whose external boundary comprises the curved surface itself.

The simplest example of a curved surface with a concavity is a bowl-shaped surface, wherein the concavity is represented by the volume of the bowl that may be filled, e.g., by pouring a liquid inside it. However, in order for such a surface to have a concavity in the sense defined here above, the bowl-shaped surface must not have any protrusions pointing towards said volume.

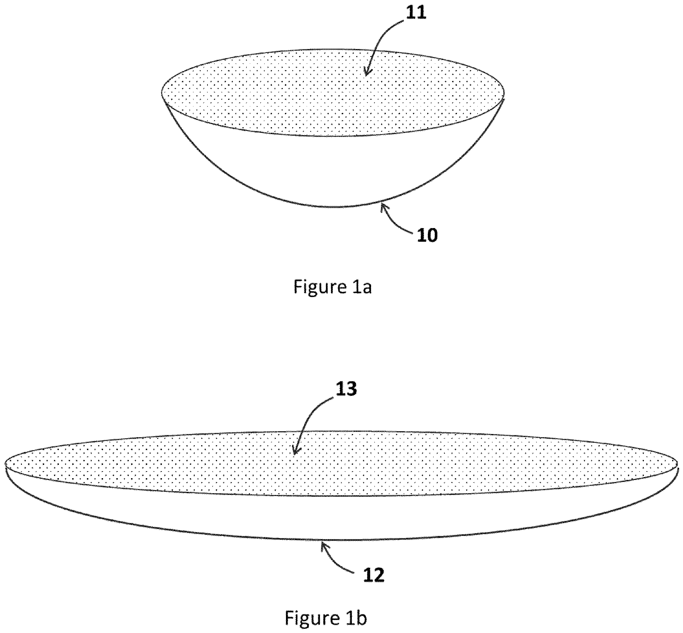

Figure 1a shows an example of a bowl-shaped surface (10) that has a concavity (11). In particular, surface (10) in Figure 1a is a spherical cap. A spherical cap is a portion of a spherical surface which is cut off by a plane intersecting the sphere enclosed by the spherical surface. The concavity (11) of a spherical cap is the volume of the sphere that is correspondingly cut off by the same plane.

Figure 1b shows another similar example of a curved surface (12) having a concavity (13), which is an elliptical cap. An elliptical cap is a portion of an ellipsoidal surface which is cut off by a plane intersecting the ellipsoid enclosed by the ellipsoidal surface. The concavity (13) of an elliptical cap is the volume of the ellipsoid that is correspondingly cut off by the same plane.

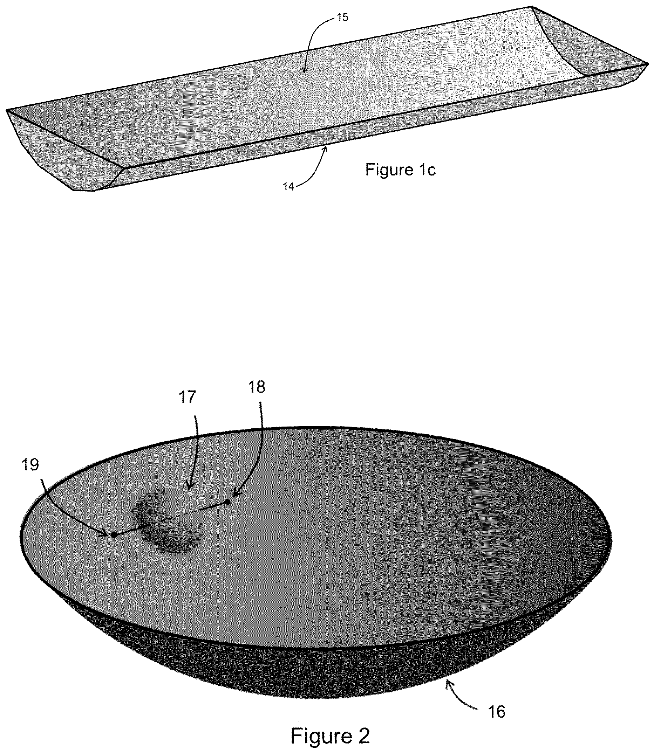

Figure 1c shows a third example of a curved surface (14) having a concavity (15), which is an arc of a cylinder (sometimes called also a "barrel vault"). An arc of a cylinder is a portion of a cylindrical surface which is cut off by a plane intersecting the cylinder enclosed by the cylindrical surface. The concavity (15) of an elliptical cap is the volume of the cylinder that is correspondingly cut off by the same plane.

On the other hand, figure 2 shows an example of a curved surface (16) which does not have a concavity in the sense of the definition given above. Such a surface is still bowl-shaped, but with a protrusion (17) towards the inside of the bowl. In this case, due to the presence of the protrusion on the surface, there exist straight lines connecting pairs of points on the surface which intersect the surface itself. For example, the straight line connecting points (18) and (19) on opposite sides of the protrusion (17) in Figure 2 intersects the surface (16), in particular in the region of the protrusion (17).

However, it is important to remark that a curved surface which does not have a concavity may comprise a part which, on the contrary, is a curved section with a concavity. This is the case of the surface shown in Figure 2: any portion of this surface not comprising the protrusion (17) is a curved surface with a concavity.

From these simple examples one understands that, in an intuitive sense, a curved surface with a concavity is a curved surface whose curvature is "always in the same direction".

Very surprisingly, it was found that an underbody protection element according to the invention may provide substantial advantages compared to state of the art solutions, in particular in terms of impact resistance. This is indeed surprising, since these advantages may come along with weight reduction and design simplification.

In particular, mechanical analyses showed that, already in the very early and critical stages following an impact, thanks to the plurality of panel portions each having at least one side formed by a curved surface with a concavity, the impact protection panel according to the invention internally develops a stress distribution that presents a substantial tensile or compressive component, differently from state of the art impact protection plates for which, in the very early stages following an impact, the internal stress distribution is almost exclusively of a bending kind, due to their substantially flat shape. This makes the impact protection panel according to the invention more resistant to impacts, in particular in the very first and critical stages following the impact, compared to state of the art solutions.

The impact protection panel according to the invention is characterized by comprising a plurality of portions each having at least one side shaped as a curved surface with a concavity that faces the electric battery of the associated vehicle when the underbody protection element is installed on said vehicle. For brevity, we will refer to a generic portion of the impact protection panel having one side shaped as a curved surface with concavity as "a curved part" or "a curved portion" or "a curved region" of the impact protection panel according to the invention.

Several advantageous embodiments of a curved part of the impact protection panel according to the invention can be envisaged. In a first embodiment, both sides of a curved part of the impact protection panel according to the invention are shaped as a curved surface having a concavity facing the battery of the associated vehicle when the underbody protection element according to the invention is installed on it. In this embodiment, the impact protection effectiveness of the impact protection panel according to the invention is enhanced, thanks to the fact that not just one side, but both sides of a curved part of the impact protection panel according to the invention are shaped as curved surfaces with a concavity. Furthermore, in this embodiment the two sides of a curved part of the impact protection panel according to the invention are preferably substantially parallel to each other, making the thickness of said curved part substantially constant, which may facilitate the production process.

In a second embodiment, in order to further enhance the impact resistance of the underbody protection element according to the invention, both sides of a curved part of the impact protection panel according to the invention may be shaped as a curved surface with concavity, however only one of them has the concavity facing the battery of the associated electric vehicle when the underbody protection element is installed on said vehicle, the other side having the concavity facing away from said battery. In this embodiment, the thickness of a curved part of the impact protection panel according to the invention is not constant. This may make this embodiment more complex in terms of production process, compared to the previous embodiment.

In a third embodiment, only the battery side of a curved part of the impact protection panel according to the invention is shaped as a curved surface with a concavity, while the road side is substantially flat and horizontal. This embodiment may result advantageous since it may minimize the aerodynamic impact of the underbody protection element according to the invention, while retaining a benefit in terms of impact resistance compared to state of the art solutions, wherein both sides of the impact protection panel are typically substantially flat. Also in this embodiment, the thickness of a curved part of the impact protection panel according to the invention is not constant. However, one of the two sides of this same part is flat, making the production process easier compared to the above-described second embodiment.

The above-mentioned embodiments for a curved part of the impact protection panel according to the invention represent just examples. Starting from these, the person skilled in the art may easily envisage other advantageous embodiments.

As far as the shape of the surface with concavity forming at least one side of a curved part of the impact protection panel according to the invention, no specific limitation applies. Exemplary shapes are a spherical cap, an elliptic cap, a barrel vault (i.e. an arc of a cylinder) and a cloister vault (i.e. a set of adjacent wedge-shaped cylinder patches meeting at a point) with any kind of polygonal base, e.g. a square or a rectangular base.

In any case, whatever is its shape, the deeper is the concavity of the concave side of a curved part of the impact protection panel according to the invention, the bigger is the advantage obtained in terms of impact resistance/weight ratio for the underbody structural element according to the invention. Preferably, the depth of the concavity is at least 3mm, more preferably at least 5mm and even more preferably at least 10mm. However, the depth of the concavity may be limited by design constraints such as packaging space and ground clearance.

In a preferred embodiment, a curved part of the impact protection panel according to the invention is, when the underbody protection element according to the invention is installed on the associated vehicle, in contact along its boundary with the battery case. This may enhance the impact resistance of the impact protection panel according to the invention, since part of the mechanical stress generated by an impact is transferred to the battery case, which is generally designed to be very stiff. Particularly preferred, in this sense, is the version of this embodiment in which the contact between the boundary of a curved part of the impact protection panel according to the invention and the battery case occurs in regions wherein the local stiffness of the battery case is designed to be especially high. Such regions may be, for example, those affected by the partitions needed to sub-divide the battery case internal space into sub-compartments for the different battery modules and/or the regions of the battery tray affected by ribs and/or beads/embossments and/or the regions where the thickness of the battery tray is larger.

In the above mentioned embodiment, in which a curved part of the impact protection panel according to the invention is in contact along its boundary with the battery case, said boundary is preferably surrounded by an area of the impact protection panel wherein this same panel is also in contact with the battery case. Preferably, said contact area has the shape of a thin strip all around the boundary of a curved part of the impact protection panel according to the invention. Furthermore, said contact area preferably presents through openings designed to receive connecting elements used to fasten the impact protection panel to the battery case of the associated electric vehicle. The fixation of the impact protection panel to the battery case at points around a curved part according to the invention further enhances the impact resistance of this part and thus of the underbody protection element according to the invention.

The impact protection panel according to the invention comprises a plurality of curved parts according to the invention and not just one curved part according to the invention. In particular, as it becomes apparent from the embodiments described in what follows, by means of a plurality of curved parts according to the invention it is possible to enhance the distribution of the impact resistance over the surface of the impact protection panel according to the invention and to optimally adapt it to the design of the battery this same panel intends to protect. This is not possible by means of a single curved part according to the invention covering substantially the whole surface if the impact protection panel. Furthermore, for a given allowable space, a single curved part essentially covering the whole surface of the impact protection panel would minimize its curvature, thus substantially limiting the increase in impact resistance compared to state of the art solutions based on substantially flat impact protection panels. The allowable space is the space allowed for the installation of the underbody protection element, which is delimited on one side by the lower surface of the battery tray and on the other side by the required ground clearance.

Preferably, the impact protection panel according to the invention comprises at least 4, more preferably at least 6 and even more preferably at least 8 curved parts according to the invention.

Furthermore, the bigger is the area of the impact protection panel covered by the curved parts according to the invention, the larger is the benefit obtained in terms of impact resistance/weight. Preferably, the curved parts of the impact protection panel according to the invention cover at least 60%, more preferably at least 70%, even more preferably at least 80% of the total surface of the impact protection panel according to the invention.

The curved parts comprised in the impact protection panel according to the invention may all have the substantially the same shape, but they may also have different shapes. The shape of the curved parts of the impact protection panel according to the invention may be, in fact, determined at least in part by design constraints such as packaging space and/or ground clearance.

In a preferred embodiment, the impact protection panel according to the invention comprises a plurality of curved parts according to the invention, all having substantially the same shape and arranged in a regular pattern. This embodiment, besides facilitating the design of the impact protection panel, may lead also to advantages in terms of impact protection effectiveness.

In a particularly preferred version of this embodiment, the above mentioned regular pattern matches the arrangement of the battery modules within the battery case. In this embodiment, the battery side of each curved part of the impact protection panel according to the invention substantially faces the portion of the battery corresponding to a battery module when the underbody protection element according to the invention is installed on the associated electric vehicle and the impact protection provided by the panel according to the invention is essentially the same for all battery modules.

For a given allowable space, this homogeneous distribution of the protection provided by the panel according to the invention to all battery modules may be seen as optimal, given the impossibility of predicting the location of any impact. Such a homogeneous distribution may not be achieved, for example, by means of an impact protection panel which substantially consists of one single curved part according to the invention.

Preferably, the areas of the impact protection panel according to the invention which are not comprised in the curved parts according to the invention are substantially flat and horizontal, meaning that both sides of such panel areas are flat and horizontal. Preferably, these same areas are at least in part in contact with the battery case when the underbody protection element according to the invention is installed on the associated vehicle.

Preferably, the above-mentioned substantially flat and horizontal areas at least partially in contact with the battery case present through openings designed to receive means for fastening the underbody protection element according to the invention to the associated electric vehicle. In this way, the fixation points of the underbody protection element according to the invention to the associated electric vehicle may advantageously be realized in a very easy and natural way and without the need of dedicated structural features as it occurs in impact protection panels belonging to the state of the art having a substantially flat shape. In fact, the substantially flat shape of these panels requires, in order to keep the desired distance from the battery case within the allowed space, that dedicated structural features are realized for the location of the fixation points. Such structural features may consist, for example, in beam-like structures and/or in raised portions of the impact protection panel that project towards the battery case. All these structural features are typically added or realized in boundary areas of the impact protection panel, but they may be added or realized also in internal areas of this same panel and they may add substantial complexity and weight to the underbody protection elements belonging to the state of the art. With the impact protection panel according to the invention, all these structural features may advantageously be avoided, thus significantly simplifying its design and production process.

At the same time, and even though this is not a preferred solution, the above-mentioned structural features may be integrated also in the underbody protection element according to the invention, in case a particularly complex design does not allow to position all the required fixation points in the substantially flat areas in between the curved parts of the impact protection panel according to the invention.

The impact protection panel according to the invention is the main component of the underbody protection element according to the invention and it is the component intended to be directly subject to possible impacts. However, the underbody protection element according to the invention may comprise, besides the impact protection panel according to the invention, other items such as ribs and/or brackets and/or flanges just to make a few examples. These items, which are not in themselves part of the impact protection panel according to the invention, may be beneficial, for example, to further stiffen the underbody protection element according to the invention and/or to install it on the associated electric vehicle.

In particular, ribs may be advantageous to further stiffen the underbody protection element according to the invention. The position of the ribs, their shape and their height largely depends on design constraints such as packaging space and/or ground clearance. Preferably, ribs are connected directly to the impact protection panel according to the invention, either on the battery side or on the road side. In a particularly preferred embodiment, ribs are connected to at least one curved part of the impact protection panel according to the invention, in such a way to further enhance its resistance to impact. Preferably, ribs are connected to more than one curved part of the impact protection panel according to the invention, which may help optimize material usage.

Furthermore, in particularly complex designs of the underbody protection element according to the invention, flanges and brackets may be introduced for accommodating fixation points which may not be conveniently located directly on substantially flat areas of the impact protection panel according to the invention as previously described.

In the underbody protection element according to the invention, the impact protection panel comprises at least one composite material. For brevity, in what follows, this at least one composite material will be referred to as "the composite material comprised in the impact protection panel according to the invention" or, more simply, as "the composite material". As mentioned in the background section, the use of composite materials for underbody protection elements in order to improve impact resistance/weight ratio compared to solutions based on metals is known.

Preferably, the impact protection panel according to the invention has an area weight comprised between 4kg/m² and 12kg/m², more preferably between 6kg/m² and 10kg/m². Furthermore, its thickness is preferably comprised between 3mm and 15mm, more preferably between 5mm and 10mm. Such a combination of area weight and thickness may allow achieving a resistance to impact comparable to that of metallic impact protection panels, at a substantially lower weight.

In a preferred embodiment, the impact protection panel according to the invention consists of a single composite material, in particular all the curved parts according to the invention comprised in it. Within this embodiment, particularly preferred is the case in which also the other items possibly comprised in the underbody protection element according to the invention such as ribs, flanges and brackets consist of the same composite material of the impact protection panel. In this particularly preferred embodiment, the underbody structure according to the invention is made all of the same composite material, which is advantageous in terms of production process simplification and supply chain.

However, it must be remarked that items such as ribs and/or flanges and/or brackets may also be made with material or materials different from the material or materials used for the impact protection panel according to the invention. Depending on the design constraints, this may be unavoidable in some cases and does not compromise the operation of the invention and the technical advantages to be derived therefrom.

The at least one composite material comprised in the impact protection panel according to the invention is preferably a sandwich. As already mentioned, a sandwich is a composite material consisting of a core layer and two skin layers, wherein one of the skin layers is cohesively bonded to one side of the core layer and the other skin layer is cohesively bonded to the other side of the core layer. Sandwich composite materials are known in the field to provide a particularly good ratio between mechanical resistance and weight. They also offer excellent design flexibility, allowing for different performance and mechanical characteristics for the impact protection panel, depending on the materials chosen for the core and skin layers and their respective properties, as exemplified in the embodiments described in what follows. When the at least one composite material comprised in the impact protection panel according to the invention is a sandwich, the thickness of the core layer as well as the thickness of the skin layers is preferably comprised between 1mm and 5mm, more preferably between 2mm and 4mm.

In a first embodiment of the sandwich composite material, both the core layer and the skin layers consist of one or more fiber reinforced plastic (FRP) materials. A FRP material is a composite material whose main constituents are a polymeric matrix and reinforcing fibers. Besides these two main constituents, it may also comprise other minor constituents, such as fillers and/or pigments for colouring and/or UV-inhibitors. Examples of FRP materials are the previously cited GFRP and CFRP materials. Preferably, the polymeric matrix of the core layer and those of the skin layers consist of chemically compatible materials, e.g. they all consist of polypropylene, which favours the cohesion of the sandwich layers to each other.

The above-mentioned polymeric matrix may be thermoplastic or thermoset. Examples of thermoplastic materials that may be used for the polymeric matrix of the core layer and/or of the skin layers are polypropylene (PP), polyamide (PA), polybutylene terephthalate (PBT), polycarbonate (PC), polyethylene terephthalate (PET), high-density polyethylene (HDPE), low-density polyethylene (LDPE), polyphenylene sulfide (PPS), thermoplastic polyolefins (TPO) or thermoplastic polyurethanes (TPU). Examples of thermoset materials are unsaturated polyester (UP), epoxy, and thermoset polyurethanes (PU).

The above-mentioned reinforcing fibers may be endless filaments or long staple fibers, i.e. staple fibers having an average length of at least 5mm, preferably comprised between 10mm and 25mm. Examples of reinforcing fibers are glass fibres and/or carbon fibres and/or aramid fibres and/or basalt fibers and/or natural fibers and/or polyethylene fibers and/or polyesther fibers and/or a mixture thereof.

Preferably, in this first embodiment of the sandwich composite material, in which both the core layer and the skin layers consist of one or more fiber reinforced plastic (FRP) materials the core layer and/or the skin layers of the sandwich comprise at least 20% by weight, more preferably at least 45% and even more preferably at least 70% by weight of reinforcing fibers, wherein the percentage is calculated on the weight of the layer. A higher content of reinforcing fibers obviously enhances the mechanical properties of the FRP material or materials comprised in the sandwich and thus of the impact protection panel according to the invention. However, it may also increase the related weight and production cost.

Besides the polymeric matrix and the reinforcing fibers, the FRP material or materials comprised in the core and/or the skin layers of the sandwich material according to this first embodiment may also comprise a non-reinforcing or weak-reinforcing filler. This filler may be a non-reinforcing filler in the sense of ASTM-D-883, i.e. a relatively inert material added to a polymeric matrix to modify its working properties or lower costs, but not to substantially improve its mechanical properties such as mechanical stiffness. Examples are Talcum, BaCO3, CaCO3, silica or carbon black. The filler may also be a weak reinforcing filler such as one of mica platelets, short glass fibers, short carbon fibers, short basalt fibers, short aramid fibers, wherein short means having an average length lower than approximately 5mm.

In a preferred version of the first embodiment of the sandwich composite material comprised in the impact protection panel according to the invention, the core layer consists of one layer of FRP material comprising reinforcing fibers in the form of long staple fibers, for example glass fibers, and the skin layers comprise a plurality of layers stacked on top of each other, wherein each layer consists of a FRP material comprising reinforcing fibers in the form of filaments. Preferably, in this version of the first embodiment of the sandwich composite material, the filaments comprised in each of the plurality of FRP layers constituting a skin layer are oriented according to one or more pre-determined directions, with the purpose of increasing the mechanical resistance of the same skin layer and then of the overall underbody protection element according to the invention. Preferably, in this version of the first embodiment of the sandwich composite material, at least 5 FRP layers are comprised in each skin layer, more preferably at least 8 and even more preferably at least 10.

Always in this version of the first embodiment of the sandwich composite material comprised in the impact protection panel according to the invention, the FRP layers comprised in the skin layers may consist of semi-finished products known in the field, in particular they preferably consist of UD-sheets.

A UD-sheet is a layer of FRP material consisting of unidirectionally aligned endless filaments embedded in a polymeric matrix. With this kind of semi-finished product, it is particularly easy to arrange the FRP layers comprised in each skin layer so that the filaments in each FRP layer are oriented according to one pre-determined direction, with the purpose of increasing the mechanical resistance of the skin layer itself. In particular, in case a skin layer consists of a plurality of UD-sheets stacked on top of each other, these same UD-sheets are preferably arranged in such a way that the filaments of one UD-sheet are perpendicular to those of the adjacent UD-sheet or sheets.

In a second embodiment of the sandwich composite material comprised in the impact protection panel according to the invention, the core layer comprises a viscoelastic matrix and the skin layers consist of one or more fiber reinforced plastic (FRP) materials as described for the first embodiment of the sandwich composite material. This combination is particularly advantageous in that it combines the ability of the FRP skin layers to resist/mitigate an impact with the ability of the viscoelastic core to absorb/dissipate the energy of the impact itself. The viscoelastic core layer may even help the impact protection panel according to the invention bounce back after the impact as well as avoid cracking of the impact protection panel itself.

In this second embodiment, the viscoelastic matrix comprised in the core layer preferably comprises a thermoplastic polyolefin (TPO) and a filler, wherein the TPO is preferably a thermoplastic elastomer with a density preferably below 0.885 kg/dm³, more preferably below 0.875 kg/dm³, even more preferably comprised between 0.870 and 0.875 kg/dm³. The filler is preferably a non-reinforcing filler such as talcum, BaCO3, CaCO3, silica or carbon black. The filler may also be a weak reinforcing filler such as one of mica platelets, short glass fibers, short carbon fibers, short basalt fibers, short aramid fibers, wherein short means having a length lower than approximately 5mm.

In a particularly preferred realization of this second embodiment, the core layer comprises a viscoelastic matrix with a shore D hardness of below 62, preferably below 57 and even more preferably between 45 and 57 and the skin layers consist of a plurality of layers stacked on top of each other, wherein each layer consists of a FRP material comprising reinforcing fibers in the form of filaments, similar to those previously described for the first embodiment of the sandwich composite material comprised in the impact protection panel according to the invention.

The underbody protection element according to the invention may be produced according to processes known in the art. For example, a production process may include the following steps:
1. Provide a first cover layer, consisting of one or more FRP layers each in the form of a UD-sheet. This first cover layer must be pre-heated to a temperature that is high enough to make the polymeric matrix of the FRP layers melt but not high enough to drip the same polymeric matrix from said FRP layers. This cover layer becomes, in the final product, one of the skin layers of the sandwich constituting the impact protection panel according to the invention. For example, the first cover layer may consist of a plurality of UD sheets, each consisting of 75%wt of glass-fiber filaments embedded in a polypropylene matrix, stacked on top of each other and arranged in such a way that the filaments of a UD sheet are perpendicular to those of the adjacent UD sheet or UD sheets. In this case, the above-mentioned pre-heating temperature may range between 190degC and 210degC.
2. Provide on top of the first cover layer an adequate mass of a pre-heated and unshaped compound essentially consisting of a mixture of a polymeric matrix and reinforcing fibers. The pre-heating temperature must be above the melting temperature of the polymeric matrix but not high enough that the polymeric matrix drips from the compound. For example, the compound may consist of a mixture of polypropylene with 30%wt of long staple glass fibers and in this case a pre-heating temperature of about 240degC may be adequate. This mass of unshaped compound, which becomes the core layer of the impact protection panel in the final product, may be obtained by extrusion through a twin-screw extruder fed with pellets of polymeric matrix, for example polypropylene pellets, and rovings of reinforcing fibers, for example glass fibers. When supplied to the extruder, the reinforcing fibers are in the form of filaments; however, during the extrusion process they are broken into long staple fibers and the extrusion process parameters shall be adjusted as known in the art, so that their length is in the range between 10mm and 25mm.
3. Provide, on top of the mass of the pre-heated and unshaped compound mentioned at point 2 a second cover layer consisting of one or more FRP layers each in the form of a UD-sheet, pre-heated to a temperature that is high enough to make the polymeric matrix melt but not high enough to drip the same polymeric matrix from said FRP layers. This cover layer becomes, in the final product, the second skin layer of the impact protection panel according to the invention. This second cover layer is preferably the same as the first cover layer, which helps improving the dimensional stability of the final product, reducing warping effects.
4. The stack consisting of the two cover layers and the unshaped compound in between them is introduced in a compression flow-moulding tool consisting of an upper half-tool and a lower-half tool which, when the tool is closed, delimit a cavity of the desired shape for the underbody protection element according to the invention. In particular, this shape comprises the curved parts of the impact protection panel according to the invention.
5. The compression flow-moulding tool is closed so that the pressure exerted on the above-mentioned stack distributes the unshaped compound between the cover layers, while forming the whole stack into a part consisting of a sandwich composite material having the desired shape for the underbody protection element according to the invention, wherein the cover layers mentioned at point 1 and 3 are formed into the skin layers and the compound mentioned at point 2 is formed into the core layer of the sandwich composite material.
6. The compression flow-moulding tool is opened and the underbody protection element according to the invention is removed from it.

An alternative production process for the underbody protection element according to the invention may consist in providing the same stack mentioned at point 4 but with the cover layers and the unshaped compound at room temperature (i.e. not pre-heated), heat-up the whole stack to a temperature above the melting temperature of the polymeric matrix or polymeric matrices included in the cover layers and in the unshaped compound but not high enough that these same polymeric matrices drip and eventually form the whole stack by means of a relatively cold moulding tool, e.g. kept at a temperature of about 50-60degC. The above-mentioned heating step may be carried out, for example, in a hot-air oven.

Furthermore, in case the design of the underbody protection element according to the invention presents items and/or features with a strong three-dimensional nature, for example very high ribs or complex brackets, the above described flow moulding and cold-moulding processes may be complemented by injection moulding process steps for the addition of these same features.

The above described processes represent just a portion of possible examples. Depending on the design and on the performance requirements of the underbody protection element, the person skilled in the art can consider variants on these processes and/or envisage different ones as known in the art.

Furthermore, also all the embodiments previously described for the underbody protection element and/or the impact protection panel according to the invention represent just example embodiments. Further embodiments may be derived from the description also by combining the different embodiments and examples of the invention and may be also derived from the description of the embodiments shown in the figures. However, the figures are schematic and not necessarily in scale. All ranges disclosed include end-points.

### Brief description of drawings

Figures 1a, 1b and 1c show examples of curved surfaces having a concavity.
Figure 2 shows an example of a curved surface which does not have a concavity, in the sense previously explained.
Figure 3a shows a first example of an underbody protection element according to the invention. Figures 3b and 3c show respectively a longitudinal and a transversal cross-section of this same element.
Figure 4a shows a second example of an underbody protection element according to the invention. Figures 4b and 4c show respectively a longitudinal and a transversal cross-section of this same element.
Figure 5a shows, for comparative purposes, an example of an underbody protection element belonging to the state of the art. Figures 5b and 5c show respectively a longitudinal and a transversal cross-section of this same element.
Figure 6 shows a battery tray used in the field to support a battery of an electric vehicle, complete with the structural partitions typically used to sub-divide the internal space of a battery case into sub-compartments for the accommodation of the battery modules.
Figure 7 shows a longitudinal section of an underbody protection element according to the invention as installed under the battery tray of an associated electric vehicle.
Figure 8 shows, for comparative purposes, a longitudinal section of an underbody protection element belonging to the state of the art, as installed under the battery tray of an associated electric vehicle.
Figure 9 shows a chart comparing the deflection under a slow impact of underbody protection element according to the invention with that of an underbody protection element belonging to the state of the art.

Figures 1a, 1b, 1c and 2 have already been described and commented on previously and will not be analysed further here.

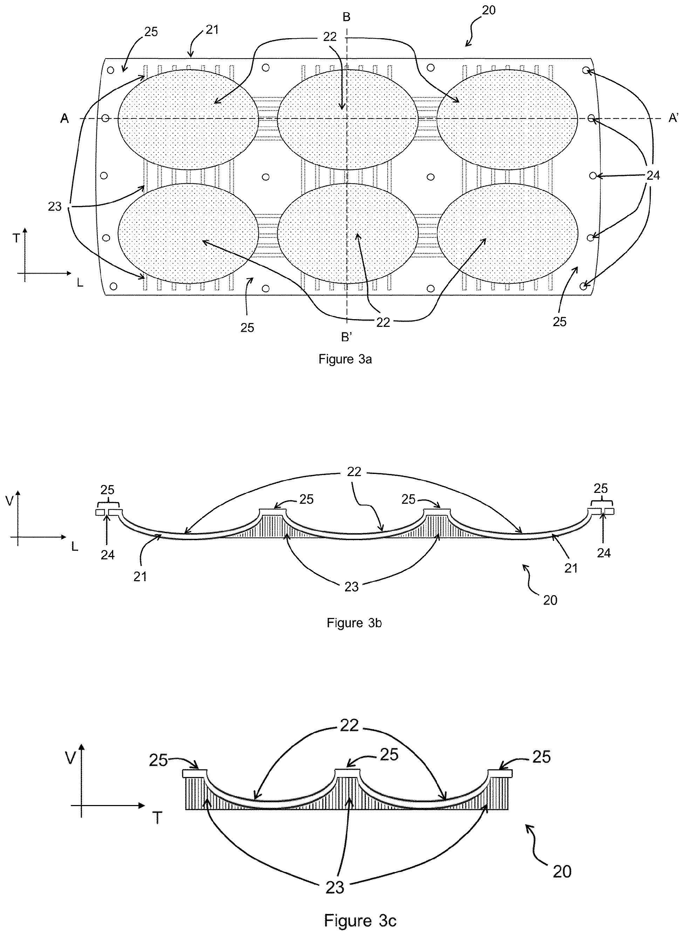

Figure 3a shows a first example of an underbody protection element (20) according to the invention. The underbody protection element (20) comprises an impact protection panel (21) and Figure 3a is a view of the underbody protection element (20) from the side of the impact protection panel (21) which, when the underbody protection element (20) is installed on the associated electric vehicle, is intended to face the battery, i.e. the battery side. Figures 3b and 3c show two sections of the underbody protection element (20) shown in Figure 3a. Namely, Figure 3b shows the longitudinal section A-A' and Figure 3c shows the transversal section B-B' indicated in Figure 3a, wherein the longitudinal and transversal directions are indicated by the reference two-dimensional Cartesian coordinate system shown in Figure 3a respectively with the letters "L" and "T". In Figures 3b and 3c, coordinate systems indicate the same transversal and longitudinal directions and the associated vertical direction, which is indicated with letter "V" and which represents the direction defined in such a way that the longitudinal, transversal and vertical directions form, when taken in this order, a right-handed Cartesian coordinate system.

The design and the features of the underbody protection element (20) according to the invention may be best appreciated and understood by the person skilled in the art by considering Figures 3a, 3b and 3c as a whole. In what follows we will then refer to these three Figures as a whole.

The impact protection panel (21) comprises 6 panel sections (22), indicated as dotted areas in Figure 3a, each having both sides shaped as ellipsoidal caps and substantially parallel to each other, as visible in the cross-sections shown in Figures 3b and 3c. The impact protection panel (21) has substantially constant thickness.

Besides the impact protection panel (21), the underbody protection element (20) comprises reinforcing ribs (23) arranged both in the longitudinal and in the transversal direction. As visible in Figures 3b and 3c, the reinforcing ribs (23) are applied on the road side of the impact protection panel (21), i.e. the side which is opposite the battery side and that is intended to face the road when the underbody protection element (20) is installed on the associated electric vehicle. The reinforcing ribs (23) are designed in such a way to bridge between two adjacent panel sections (22), both in the transversal and in the longitudinal direction. In this way there is a clear synergy between the stiffening effect obtained thanks to the panel sections (22) and the stiffening effect obtained thanks to the ribs (23).

Furthermore, the underbody protection element (20) comprises also a plurality of through openings (24), designed to receive means for fastening the underbody protection element according to the invention to the associated electric vehicle such as screws and/or bolts and/or clips. These through openings are obtained in the flat areas (25) surrounding the panel sections (22), which are not affected by the stiffening ribs (23).

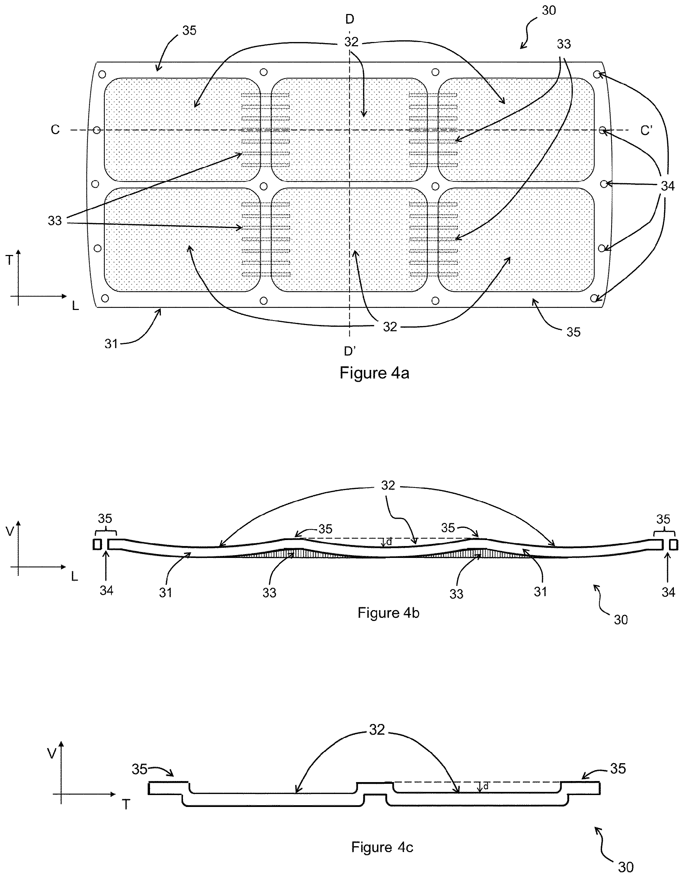

Figure 4a shows a second example of an underbody protection element (30) according to the invention, always seen from the battery side of the impact protection panel (31) comprised in it. Figures 4b and 4c show two cross-sections of the underbody protection element (30). Namely, Figure 4b shows the longitudinal section C-C' and Figure 4c shows the transversal section D-D' indicated in Figure 4a, wherein the longitudinal and transversal directions are indicated by the reference two-dimensional Cartesian coordinate system shown in Figure 4a respectively with the letters "L" and "T". In Figures 4b and 4c, coordinate systems indicate the same transversal and longitudinal directions and the associated vertical direction, which is indicated with letter "V" and which represents the direction defined in such a way that the longitudinal, transversal and vertical directions form, when taken in this order, a right-handed Cartesian coordinate system.

Similarly to the impact protection panel (21) shown in Figures 3a, 3b and 3c, the impact protection panel (31) according to the invention shown in Figures 4a, 4b and 4c comprises 6 panel sections (32) having both sides formed by a curve surface with concavity and substantially parallel to each other. However, differently from the panel sections (22) shown in Figures 3a, 3b and 3c, the shape of the surface forming the sides of the panel sections (32) is not an elliptic cap. Rather, as shown in Figures 4b and 4c, it is a curved surface whose longitudinal sections are represented by a circular arc and whose transversal sections are represented by a "bath-tub curve" as shown in Figure 4c, i.e. a curve consisting in a straight segment with two circular arcs connected at its ends.

Similarly to the underbody protection element (20) shown in Figures 3a, 3b and 3c, also the underbody protection element (30) shown in Figures 4a, 4b and 4c comprises other items besides the impact protection panel (31). Namely, it comprises longitudinal reinforcing ribs (33) applied on the road side of the impact protection panel (31) and bridging between different panel sections (32), it comprises through openings (34) for connecting it to the associated electric vehicle and it comprises flat areas (35) in between the panel sections (32).

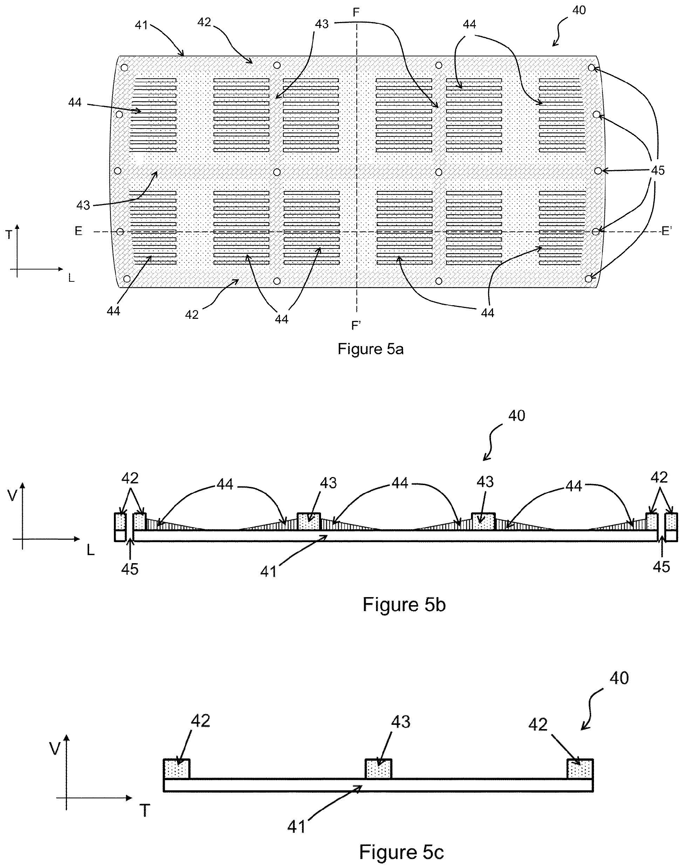

Figure 5a shows an example of an underbody protection element (40) belonging to the state of the art. This comprises an impact protection panel (41) and Figure 5a is a view from the battery side of this same impact protection panel. Figures 5b and 5c show two sections of the underbody protection element (40). Namely, Figure 5b shows the longitudinal section E-E' and Figure 5c shows the transversal section F-F' indicated in Figure 5a, wherein the longitudinal and transversal directions are indicated by the reference two-dimensional Cartesian coordinate system shown in Figure 5a respectively with the letters "L" and "T". In Figures 5b and 5c, coordinate systems indicate the same transversal and longitudinal directions and the associated vertical direction, which is indicated with letter "V" and which represents the direction defined in such a way that the longitudinal, transversal and vertical directions form, when taken in this order, a right-handed Cartesian coordinate system.

As one can see from Figures 5a, 5b and 5c, the impact protection panel (41) is substantially flat all over its area and it does not comprise any panel sections whose sides are formed by curved surfaces. For this reason, being substantially flat over all its surface, the impact protection panel according to the invention (41) requires specific structural features (42), (43) to connect it to the associated electric vehicle while keeping the desired distance from it. In the example shown in Figures 5a, 5b and 5c, these structural features are represented by beam-like structures (42) running all around the periphery of the impact protection panel (41) as well as by similar structures (43) running along its longitudinal and transversal symmetry axis. Besides these structures, and similarly to the underbody protection element (30) according to the invention, the underbody protection element (40) belonging to the prior art comprises longitudinal stiffening ribs (44) and through openings (45) designed to receive means for fastening it to the associated electric vehicle.

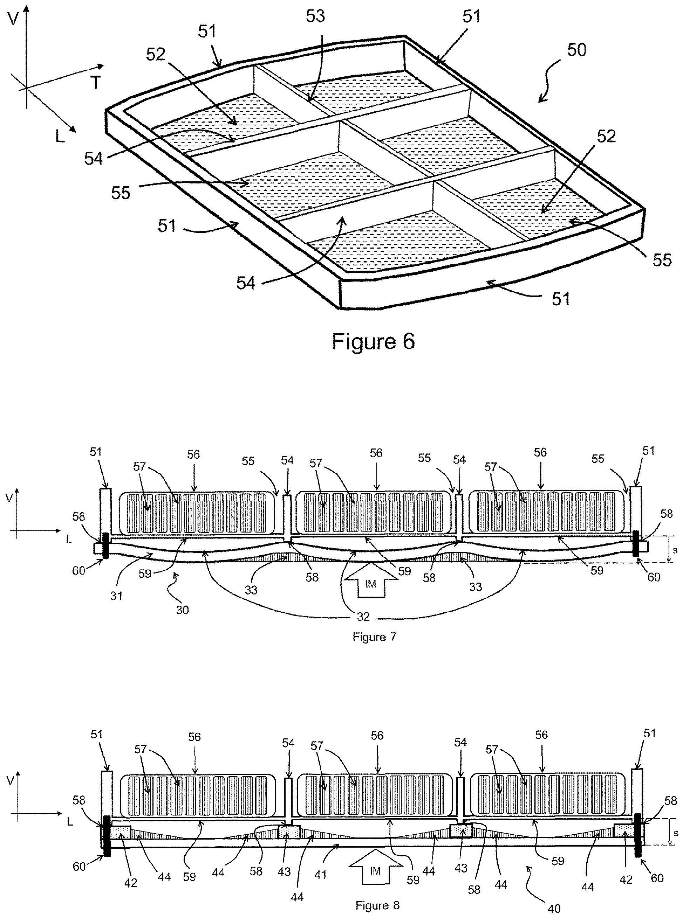

Figure 6 shows an example of a battery tray (50) used in the field for supporting the battery of an electric vehicle. The battery tray (50) comprises essentially vertical side walls (51) and an essentially horizontal floor (52), represented in Figure 6 by the dotted area. Figure 6 shows also a longitudinal partition (53) and two transversal partitions (54), wherein longitudinal, transversal and vertical directions are indicated by the three-dimensional Cartesian system in Figure 6 respectively by letters "L", "T" and "V". Partitions (53) and (54) are intended to separate the internal space of the battery case the battery tray belongs to into 6 different compartments (55), in which battery modules may be arranged essentially according to a regular 2 x 3 grid. This kind of configuration, in which the internal space of a battery case is subdivided into a regular arrangement of sub-compartments, each intended to accommodate a battery module, is common in the field.

Figure 7 shows a longitudinal section of an underbody protection element according to the invention (30) such as that shown in Figures 4a, 4b and 4c when installed under a battery tray (50) such as that shown in Figure 6. As one can see from Figure 7, the curved parts (32) of the impact protection panel (31) according to the invention are advantageously arranged in such a way that they match with the sub-compartments (55) for accommodating the battery modules (56) comprising the battery cells (57), such sub-compartments being separated one from the other by the transversal partitions (54). This arrangement of the impact protection panel (30) is advantageous in that it guarantees the same level of protection from impacts to all battery modules within a given allowable space s. The allowable space, as indicated in Figure 7, is the distance between the lower side (59) of the battery tray floor and the lowest point of the underbody protection element (30), taken in the vertical direction. The position of this point is determined by the required ground clearance. The underbody protection element (30) is fixed to the battery tray (50) by means of bolts (60) through the openings (34) visible in Figures 4a, 4b and 4c.

Furthermore, in Figure 7 the areas (58) of the impact protection panel (31) which get in contact with the battery tray (50) advantageously match with the areas where this same battery tray is particularly stiff, since they match either with areas where the side walls (51) are positioned or with areas where the transversal partitions (54) are positioned. In this way, the effect of a possible impact is transferred by the impact protection panel (31) onto areas of the battery tray that are particularly stiff and thus better suited to withstand it.

Figure 8 shows a longitudinal section of an underbody protection element (40) belonging to the state of the art such as that shown in Figures 5a, 5b and 5c when installed under the battery tray (50) shown in Figure 6. The underbody protection element (40) is fixed to the battery tray (50) by means of bolts (60) through the openings (45) visible in Figures 5a, 5b and 5c. As one can see from Figure 8, in order to install the underbody protection element (40) in such a way to exploit the allowable space s and keep the impact protection panel (41) at the desired distance from the battery tray (50), the beam-like structural features (42) and (43) are necessary. Without these, it would be simply not possible to install the underbody protection element (40) in the proper position, i.e. at the proper distance, from the battery tray (50). Advantageously, such structural features are not needed in the underbody protection element (20), (30) according to the invention since, thanks to the curved shape of panel parts (22), (32), it is possible to obtain some areas (58) which may get directly in contact with the battery tray (50) and where fixation points (60) may be positioned, without the need for any additional structures to accomplish the function of interfacing the underbody protection element (20), (30) with the battery of the associated vehicle. This helps limiting the weight of underbody protection element according to the invention, while keeping the same or even better protection from impacts.

As already previously described and as shown in this example, an arrangement such as that shown in Figure 7 offers particular advantages over state-of-the-art solutions based on substantially flat panels. However, to fully exploit these advantages, it is essential that the impact protection panel according to the invention comprises a plurality of curved parts according to the invention and not just one such part.

Structural analyses were carried out to assess the advantages obtained by means of the underbody protection element according to the invention. A Finite Element (FE) model of a first example of an underbody protection element (30) according to the invention like the one shown in Figures 4a, 4b and 4c was prepared. In this first example, each curved part (32) as shown in Figure 4a, has dimensions approximately 290mm x 630mm and a depth d, as indicated in Figures 4b and 4c, of 5.4mm. The thin flat areas in between the curved surfaces (22) as well as the flat strip-like areas (35) all around the boundary of the impact protection panel (31) have a width varying between 30mm and 40mm. The impact protection panel (31) has a constant thickness of 7.6mm and it consists of a sandwich material. The core consists of 3mm of GFRP material, with 30%wt reinforcing long glass fibers embedded in a 70%wt PP matrix. Each skin consists of 10 UD-sheets, each consisting of about 75%wt glass filaments embedded in a matrix of PP. The UD-sheets are stacked on top of each other in such a way that the filaments of a UD-sheet are oriented perpendicular to those of the adjacent UD-sheet or sheets. Reinforcing ribs on road side (33), made with the same material as the impact protection panel (31), have a thickness of 7mm. The depth d of the concavity of the curved surfaces (32), as indicated in Figures 4b and 4c, is 5.4mm. This corresponds, approximately, also to the height of the road-side ribs (33). The total weight of the underbody protection structure (30) according to the invention in this first example is 23.91kg.

Time domain Finite-Element (FE) simulations were carried out, wherein a low-speed impact on the above-described underbody protection element (30) was simulated by applying a rigid impactor having a speed of 1cm/sec against the center of the impact protection panel (31), as shown by the arrow with label "IM" in Figure 7. The impactor consisted of a rigid sphere with a diameter of 100mm. As far as boundary conditions are concerned, the underbody protection element (30) was considered in contact with a rigid surface in the areas (59) where it is intended to be put in contact with the battery tray (50) and it was considered clamped to this same rigid surface at the fixation points (34). The available space s as indicated in Figure 7, i.e. space available for the installation of the underbody structural element (30) respecting the required ground clearance, was considered to be 14mm. The outcome of the FE simulations consisted of the so-called "Reaction Force", i.e. the force needed by the impactor to progressively deform, under its action, the underbody protection element (30), in particular the impact protection panel (31), until it hits the lower side of the battery tray (59).

For comparative purposes, a FE model of an underbody protection element (40) belonging to the state of the art like the one shown in Figures 5a, 5b and 5c was prepared. The overall dimensions of said underbody protection element (40) belonging to the state of the art are the same as those of the above-mentioned first example of underbody protection element (30) according to the invention. Furthermore, the beam-like structural features (42) and (43) needed to fix the impact protection panel (41) to the associated electric vehicle have a width of about 30mm and a height of about 5.4mm. The impact protection panel (31) has a constant thickness of 6.6mm and it consists of a sandwich material. The core consists of 2mm of GFRP material, with 30%wt reinforcing long glass fibers embedded in a 70%wt PP matrix, while the skin layers as in the above-described impact protection panel (31) according to the invention. The triangle-shaped reinforcing ribs (44) have a thickness of 7mm and a maximum height of about 7.2mm and they are made with the same material as the impact protection panel (41). The total weight of the underbody protection element belonging to the state of the art is about 24.9kg. The higher weight compared to the first example of underbody protection element (30) according to the invention is mainly due to the structural features (42) and (43) needed to fix the underbody protection panel (41) belonging to the state of the art to the battery tray (50).

Time-domain FE simulations were carried out on the above-mentioned underbody protection element (40) belonging to the state of the art, similar to those previously described for the first example of underbody protection element (30) according to the invention. In particular, the impactor was applied at the centre of the impact protection panel (41) belonging to the state of the art, as shown in Figure 8 and the allowable space was considered to be 14mm.

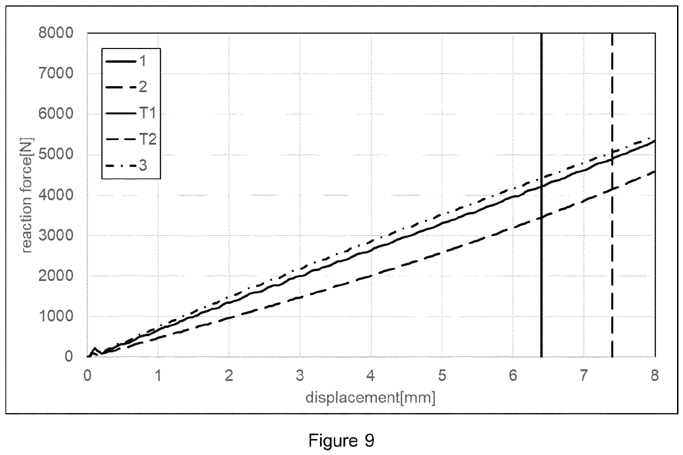

The solid line in Figure 9, i.e. the line labeled with "1", shows the Reaction Force vs. Displacement curve obtained from the above-described FE simulations for the first example of underbody protection element (30) according to the invention. The solid vertical line, labeled as "T1" in Figure 9, corresponds to the displacement at which the impact protection panel (31) according to the invention, under deflection, hits the battery tray on which it is installed. For the first example of underbody protection element (30) according to the invention, this corresponds to a displacement of 6.4mm, which is the difference between the available space s and the thickness of the impact protection panel (31). As one can see from Figure 9, the Reaction Force corresponding to this displacement is about 4200N.

The dashed line in Figure 9, i.e. the line labeled with "2", shows the Reaction Force vs. Displacement curve obtained from the above-described FE simulations for the underbody protection element (40) belonging to the state of the art. The dashed vertical line, labeled as "T2" in Figure 9, corresponds to the displacement at which the impact protection panel (41), under deflection, would hit the battery tray on which it is installed. For the underbody protection element (40) according to the invention, this corresponds to 7.4mm, which is the difference between the available space s and the thickness of the impact protection panel (41). As one can see from Figure 9, the Reaction Force corresponding to this displacement is about 4100N.

From this it is possible to conclude that with the first example of underbody protection element (30) according to the invention, a higher, i.e. better, Reaction Force may be obtained with a lower weight, compared to an underbody protection element (40) belonging to the state of the art.

A FE model of a second example of an underbody protection element (30) according to the invention was realized. Compared to the above-described first example, in this second example the depth d of the concavity of the curved surfaces (32) was increased to 7mm, keeping anyway the allowable space equal to 14mm. This was obtained by locally shifting the areas (58) where the underbody protection element is in contact with the battery tray (50) upwards by 1.6mm, however without changing the position of the lower side (59) of the battery tray. In this second example, the weight of the underbody protection element (30) according to the invention is substantially the same as in the first example.

The dash-dotted line in Figure 9, labelled as "3", gives the Reaction Force vs. Displacement curve for this second example of underbody protection element (30) according to the invention. In this second example, the Reaction Force corresponding to the displacement of 6.4mm, which is the displacement at which the underbody protection panel (31) hits the battery tray (50), increases to 4400N, compared to the 4200N of the first example of underbody protection element (30) according to the invention. Thus, by increasing the depth d of the concavity of the curved surfaces (32) it is possible to increase the Reaction Force, i.e. the resistance to impact of the underbody protection element (30) according to the invention.

It is noteworthy that, with state of the art solutions like the underbody protection element (40), a shift upwards of the areas (58) where such element is in contact with the battery tray and due, for example, to a change in the design of this same battery tray, could only be addressed by increasing the height of the structural features (42) and (43) required to fix the underbody protection element (40) to the battery tray (50). Which would result in an increase of weight with no advantage in terms of impact resistance.

This example shows that the underbody protection element (30) according to the invention offers a design flexibility, thanks to the presence of the panel sections with curved surfaces (32), which may be advantageously exploited and that is typically not available in state of the art solutions having a substantially flat shape.

## Claims

1. An underbody protection element intended to be installed on the underbody of an associated electric vehicle for protecting an electric battery from impacts and comprising an impact protection panel comprising at least one composite material and having a battery side intended to face the battery of the associated electric vehicle when the underbody protection element is installed on said vehicle and a road side intended to face away from the battery of the associated electric vehicle when the underbody protection element is installed on said vehicle, **characterized in that** the impact protection panel comprises a plurality of panel portions each having at least one side formed by a curved surface having a concavity that faces the electric battery of the associated vehicle when the underbody protection element is installed on said vehicle.

2. An underbody protection element according to claim 1, wherein said plurality of panel portions covers at least 60%, preferably at least 70%, more preferably at least 80% of the surface of the impact protection panel.

3. An underbody protection element according to claim 1 or 2, wherein for at least one of said panel portions, the concavity of the curved surface forming said at least one side has a depth of at least 3mm, preferably at least 5mm, more preferably at least 10mm.

4. An underbody protection element according to any of the preceding claims, wherein at least one of said panel portions has both sides formed by a curved surface having a concavity that faces the electric battery of the associated electric vehicle when the underbody protection element is installed on said vehicle.

5. An underbody protection element according to any of the preceding claims, wherein at least one of said panel portions has one side, preferably the battery side, formed by a curved surface having a concavity that faces the electric battery of the associated electric vehicle when the underbody protection element is installed on said vehicle and one side, preferably the road side, which is substantially flat.

6. An underbody protection element according to any of the preceding claims, wherein at least one of said panel portions is intended to face a battery module of the electric battery when when the underbody protection element is installed on the associated electric vehicle.

7. An underbody protection element according to any of the preceding claims, wherein the impact protection panel has an area weight comprised between 4kg/m² and 12kg/m², preferably between 6kg/m² and 10kg/m².

8. An underbody protection element according to any of the preceding claims, wherein the impact protection panel has a thickness comprised between 3mm and 15mm, preferably between 5mm and 10mm.

9. An underbody protection element according to any of the preceding claims, wherein the at least one composite material consists of a sandwich composite material.

10. An underbody protection element according to claim 9, wherein both the core layer and the skin layers of the sandwich composite material comprise at least one fiber-reinforced-plastic material.

11. An underbody protection element according to claim 10, wherein the at least one fiber-reinforced-plastic material comprises a polymeric matrix comprising at least one of: polypropylene (PP) and/or a copolymer of PP, a polyamide (PA) and/or a copolymer of a PA, polybutylene terephthalate (PBT), polycarbonate (PC), polyethylene terephthalate (PET) and/or a polyester, high-density polyethylene (HDPE), low-density polyethylene (LDPE), polyphenylene sulfide (PPS), thermoplastic polyolefins (TPO), thermoplastic polyurethanes (TPU), unsaturated polyester (UP), epoxy, thermoset polyurethanes (PU).

12. An underbody protection element according to claim 10, wherein the at least one fiber-reinforced-plastic material comprises reinforcing fibers comprising at least one of: glass fibres, carbon fibres, aramid fibres, basalt fibers, natural fibers, polyethylene fibers, polyester fibers, or a mixture thereof.

13. An underbody protection element according to claim 10, wherein the core layer consists of one layer of fiber-reinforced-plastic material comprising reinforcing fibers in the form of long staple fibers, preferably glass fibers, and the skin layers comprise a plurality of layers stacked on top of each other, wherein each layer consists of a fiber-reinforced-plastic material comprising reinforcing fibers in the form of filaments, preferably glass filaments.

14. An underbody protection element according to claim 11, wherein each skin layer consists of UD-sheets stacked on top of each other in such a way that the orientation of the filaments in each UD-sheet is perpendicular to that of the filaments in the adjacent UD-sheets or sheet.

15. Process for the manufacturing of an underbody protection element according to claim 1 and comprising at least the following process steps:
1. Provide a first cover layer, consisting of one or more fiber-reinforced-plastic layers, pre-heated to a temperature that is high enough to make the polymeric matrix of the fiber-reinforced-plastic layers melt but not high enough to drip the same polymeric matrix from said fiber-reinforced-plastic layers.
2. Provide on top of the first cover layer an adequate mass of a pre-heated and unshaped compound essentially consisting of a mixture of a polymeric matrix and reinforcing fibers. The pre-heating temperature must be above the melting temperature of the polymeric matrix but not high enough that the polymeric matrix drips from the compound.
3. Provide, on top of the mass of the pre-heated and unshaped compound mentioned at point 2 a second cover layer consisting of one or more fiber-reinforced-plastic layers, pre-heated to a temperature that is high enough to make the polymeric matrix melt but not high enough to drip the same polymeric matrix from said fiber-reinforced-plastic layers.
4. Introduce the stack consisting of the two cover layers and the unshaped compound in between them in a compression flow-moulding tool consisting of an upper half-tool and a lower-half tool which, when the tool is closed, delimit a cavity having the desired shape for the underbody protection element.
5. Close the compression flow-moulding tool so that the pressure exerted on the stack distributes the unshaped compound between the cover layers, while forming the whole stack into a part consisting of a sandwich composite material having the desired shape for the underbody protection element.
6. Open the compression flow-moulding tool and remove the underbody protection element from it.
